# EUROPEAN PATENT SPECIFICATION

(11) **EP 2 722 316 B1**
(45) Date of publication and mention of the grant of the patent: **05.06.2019**
(21) Application number: 13168595.0
(22) Date of filing: 21.05.2013
(51) Int. Cl.: C03B 33/10, C03B 33/027

(54) **Cutting head, particularly for tables for cutting glass sheets**
Schneidkopf, insbesondere für Tische zum Schneiden von Glasscheiben
Tête de coupe, notamment pour des tables de coupe de feuilles de verre

(30) Priority: 18.10.2012 IT MI20121763
(43) Date of publication of application: 23.04.2014
(73) Proprietor: Macotec S.R.L., 23010 Rogolo, (SO) (IT)
(72) Inventor: Combi, Mauro, 23823 COLICO LC (IT)
(74) Representative: Modiano, Micaela Nadia

(56) References cited:
- US-A- 3 130 499
- US-A- 3 165 018
- US-A- 4 881 439
- US-A- 5 168 788

## Description

The present invention relates to cutting heads particularly for tables for cutting glass sheets. More particularly, the invention relates to a cutting head for tables for cutting flat glass sheets.

As is known, tables for cutting glass sheets, particularly flat glass sheets, are constituted by a working surface on which a cutting bridge slides longitudinally and is arranged transversely with respect to the longitudinal extension of the working surface or table and to the glass sheet to be cut. A cutting carriage slides on the deck and accommodates at least one cutting head adapted to be lowered toward the class to be cut and raised when the cutting operation has ended.

Depending on the thickness and the type of glass to be treated, it is necessary to be able to change the cutting tool supported by the cutting head.

For this purpose, EP 0970924A2 describes a solution in which a tool magazine is arranged in a very specific region of the working surface. Therefore, whenever a change of tool, i.e., a change of the cutting tool to be connected to the cutting head, is required, the cutting head must reach the region of the magazine, deposit the old tool and pick up the new one.

In another solution, known from WO 2011/051335, the tool magazine is arranged below the bridge and can slide along said bridge since it is connected to the cutting carriage, the movement of which it uses, so as to have the tools always proximate to said cutting head.

The connection between the cutting carriage and the tool magazine is provided so that the two elements are mutually integral when the machine is cutting, but can disengage when tool changing is required, so as to allow the relative movement of the two parts in order to align the cutting head with the appropriate position of the tool magazine (initially for deposition and then for pickup of the tool).

Other solutions provide for a cutting carriage that supports a plurality of cutting heads simultaneously, for example four complete cutting heads, i. e. not just cutting tools, but a head equipped with the corresponding tool and with all the mechanical, pneumatic, electrical and electronic devices adapted to allow the ascending/descending motion of the cutting head as well as rotation, so that the user can choose in each instance the cutting head that is suitable for the type of cut to be performed.

However, all the solutions described above are affected by the drawbacks due to the time required for moving the cutting head for tool changing or by constructive complexities and therefore costs related to the difficulty of providing, for example, four cutting heads connected to the cutting carriage.

US 3 165 018 A and US 3 130 499 A disclose cutting heads having a combination of features as defined in the pre-characterizing portion of the appended claim 1.

The aim of the present invention is to provide a cutting head, particularly for tables for cutting glass sheets, that is highly versatile as regards the types of cuts to be performed on various thicknesses or types of glass.

Within the scope of this aim, an object of the present invention is to provide a cutting head that allows cutting tool changing in extremely short time and substantially without moving said cutting head.

Another object of the present invention is to provide a cutting head in which swiftness in tool changing is combined with a high constructive simplicity.

Another object of the present invention is to provide a cutting head that is highly reliable, relatively simple to provide and has competitive costs.

In accordance with the invention, there is provided a cutting head, particularly for tables for cutting glass sheets, as defined in the appended claims.

Further characteristics and advantages of the invention will become more apparent from the description of a preferred but not exclusive embodiment of the cutting head according to the present invention, illustrated by way of non-limiting example in the accompanying drawings, wherein:

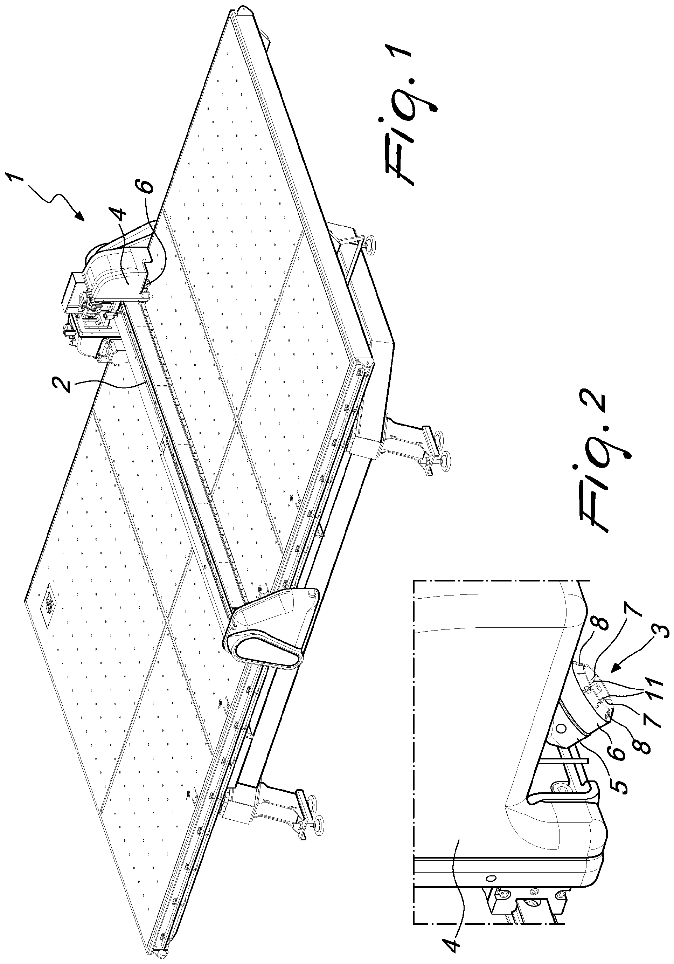

Figure 1 is a perspective view of a cutting table for glass sheets to which the cutting head according to the invention is applied;
Figure 2 is an enlarged-scale partial view of the cutting head of the cutting table of Figure 1;
Figure 3 is a view of a further detail of the cutting head according to the invention;

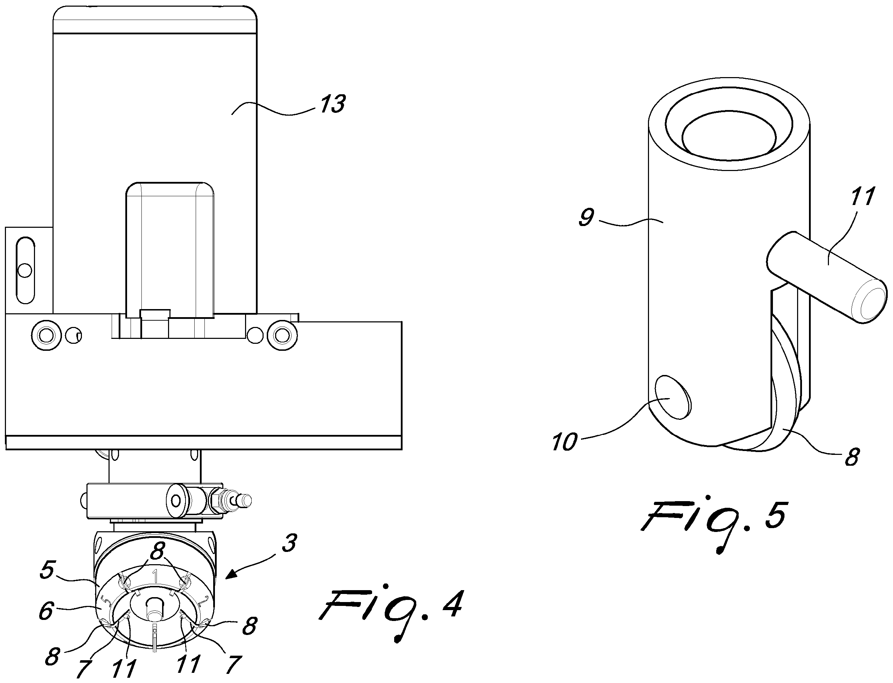

Figure 4 is a front view of the cutting head according to the invention;
Figure 5 is a view of the cutting tool holder assembly of the cutting head according to the invention;

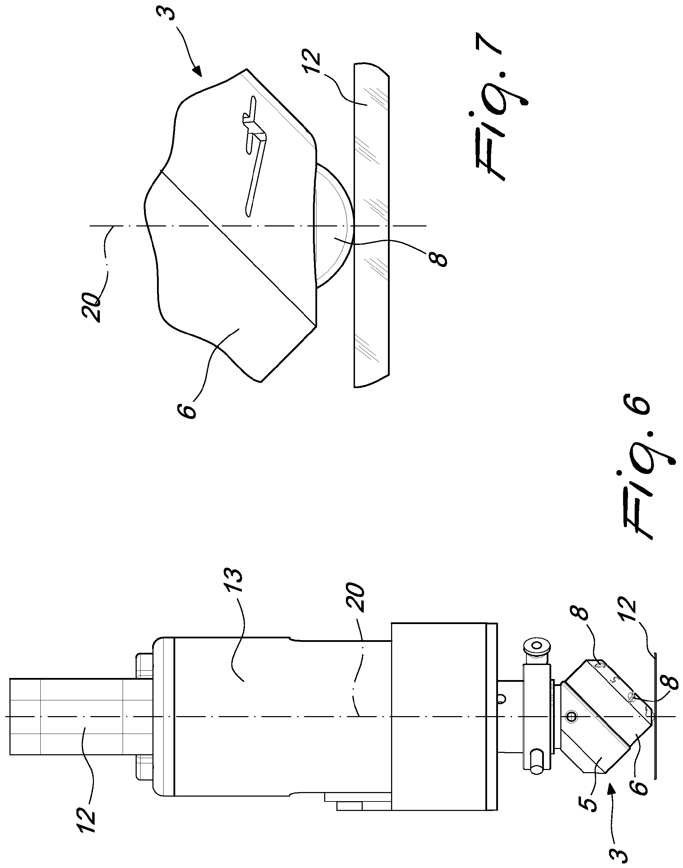

Figure 6 is a lateral elevation view of the cutting head according to the invention; and
Figure 7 is a detail view of the cutting wheel of the cutting head according to the invention.

With reference to the figures, the reference numeral 1 designates a cutting table for glass sheets 12, particularly of the flat type, which comprises a cutting bridge 2 that is adapted to move longitudinally along the extension of the cutting table 1 and is arranged transversely to the longitudinal extension of the table and therefore to the glass sheet 12 to be cut.

A cutting carriage moves along the cutting bridge 2.

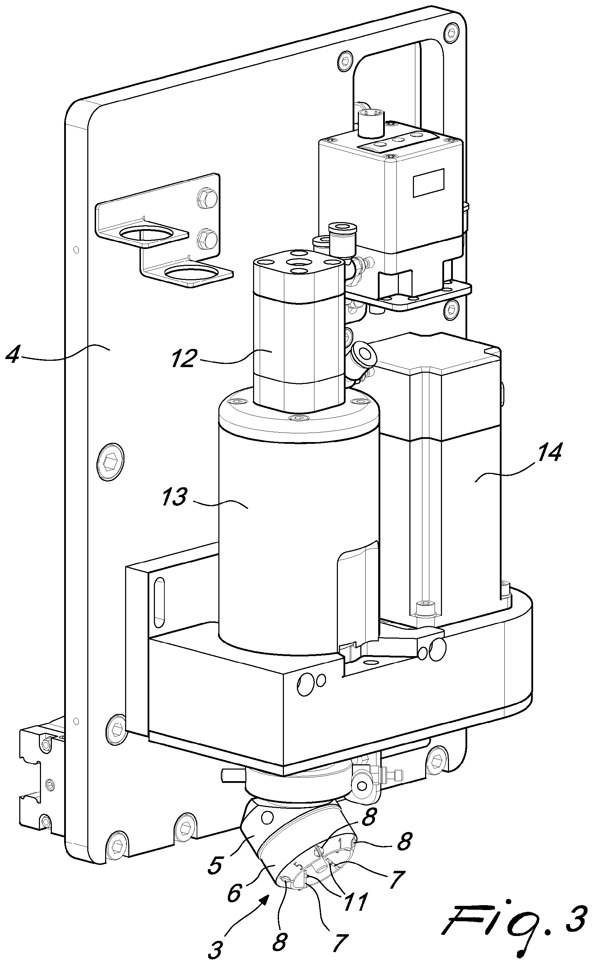

With reference to Figure 3, the cutting carriage is constituted by a plate 4 provided with adapted mechanical elements for its sliding along the bridge 2, which supports the cutting head assembly and all the devices adapted to allow their ascent/descent movements (pneumatic cylinder 12 and guiding body 13) and rotation (electric motor 14). Conveniently, the cutting head 3 comprises a head body 5, which is actuated by the pneumatic cylinder 13 and by the electric motor 14, which allows the lowering of the body 5 in contact with the glass 12 to be cut and its rotation.

The body 5 of the cutting head is inclined at a given angle with respect to the working surface, for example it is angled substantially at 45° with respect to the working surface and has a tool changing device 6 that is coupled thereto and in turn provides a plurality of seats 7 adapted to accommodate a plurality of cutting wheels 8 that constitute the cutting tool for cutting the glass sheet 12.

Conveniently, the tool changing device 6 can rotate with respect to the head body 5 and therefore can offer in each instance the cutting wheel 8 that is most suited for the machining in progress.

The cutting wheel 8 is therefore arranged during machining in absolute axial alignment with the axis 20 of the body 5 of the cutting head, which is vertical with respect to the cutting plane.

Conveniently, inside the tool holder 6, each cutting wheel 8 is coupled to a pillar 9 for supporting the cutting wheel 8, which is pivoted to the pillar 9 by means of a rotation shaft 10.

Advantageously, the pillar 9 has a shaft 11 for the orientation of the cutting wheel 8.

Advantageously, the seats 7 of the tool holder 6 are formed as radial slots that allow the exit of the wheel 8 so that said wheel can be approached to the cutting surface 1 in a vertical position with respect to it.

The rotation of the tool holder 6 can be performed manually or in a motorized manner.

The use of the cutting head with the corresponding tool holder tightly connected thereto and with a plurality of tools already installed on board makes it possible to minimize tool changing times, since this occurs merely by rotating the tool holder 6 so as to actuate the cutting wheel at the point of contact with the glass in order to cut it.

In practice it has been found that the cutting head for tables for cutting glass sheets according to the present invention fully achieves the intended aim and objects.

All the details may further be replaced with other technically equivalent elements.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cutting head (3), particularly for tables (1) for cutting glass sheets, comprising a head body (5) adapted to be moved along an axis (20) away and toward a cutting table (1) on which a glass sheet (12) to be cut is arranged, said axis (20) being arranged vertical with respect to the cutting plane of the glass sheet (12) arranged on the cutting table (1), and a tool holder (6) that is connected to said head body (5) and is adapted to be rotated with respect to said body, said tool holder (6) accommodating a plurality of cutting wheels (8) adapted to be arranged in a cutting position following the rotation of said tool holder with respect to said body (5) of the cutting head, **characterized in that** said body (5) of the head and said tool holder (6) connected thereto is arranged substantially at an angle with respect to said cutting table (1) on which said sheet (12) to be cut is arranged, and the cutting wheel (8) is arranged in the cutting position in axial alignment with the axis (20) of movement of the head body (5).

2. The cutting head according to claim 1, **characterized in that** said tool holder (6) comprises a plurality of seats (7) adapted to accommodate a respective number of cutting wheels (8).

3. The cutting head according to one or more of the preceding claims, **characterized in that** said body (5) of the head and said tool holder (6) are angled with respect to said cutting table so that the active cutting wheel is perpendicular to said glass sheet to be cut and the inactive cutting wheels are in a non-interfering position.

4. The cutting head according to claim 2, **characterized in that** said seats (7) of said tool holder (6) are slots arranged radially along the edge of said tool holder (6), in order to accommodate said cutting wheels (8).

5. The cutting head according to claim 4, **characterized in that** said cutting wheels (8) protrude from said radial slots (7) of said tool holder (6) by an extent that is sufficient for said cutting wheel to engage said glass sheet to be cut (12).

6. The cutting head according to claim 1, **characterized in that** said cutting wheels (8) are supported by supporting pillars (9) accommodated within said tool holder (6).

7. The cutting head according to claim 6, **characterized in that** said supporting pillars (9) comprise a tool orientation shaft (11).

8. A cutting machine, particularly for flat glass sheets, comprising a cutting surface (1) that is surmounted by a cutting bridge (2) along which a cutting carriage (4) can move which supports at least one cutting head (3), **characterized in that** said cutting head (3) is provided according to one or more of the preceding claims.

## Patentansprüche

1. Ein Schneidkopf (3), insbesondere für Tische (1) zum Schneiden von Glasscheiben, der einen Kopfkörper (5) umfasst, ausgebildet, um entlang einer Achse (20) fort von einem Schneidtisch (1) und zu ihm hin bewegt zu werden, auf dem eine zu schneidende Glasscheibe (12) angeordnet ist; wobei die Achse (20) senkrecht zur Schneidebene der Glasscheibe (12) angeordnet ist, welche auf dem Schneidtisch (1) angeordnet ist; und einen Werkzeughalter (6), der mit dem Kopfkörper (5) verbunden und ausgebildet ist, um im Verhältnis zu dem Körper gedreht zu werden, wobei der Werkzeughalter (6) eine Vielzahl von Schneidrädern (8) enthält, die ausgebildet sind, um infolge der Drehung des Werkzeughalters im Verhältnis zu dem Körper (5) des Schneidkopfs in einer Schneideposition angeordnet zu werden; **dadurch gekennzeichnet, dass** der Körper (5) des Kopfs und der damit verbundene Werkzeughalter (6) im Wesentlichen in einem Winkel zu dem Schneidtisch (1) angeordnet sind, auf dem sich die zu schneidende Scheibe (12) befindet, und das Schneidrad (8) in der Schneideposition in axialer Ausrichtung mit der Bewegungsachse (20) des Kopfkörpers (5) angeordnet ist.

2. Der Schneidkopf gemäß Anspruch 1, **dadurch gekennzeichnet, dass** der Werkzeughalter (6) eine Vielzahl von Sitzen (7) umfasst, ausgebildet, um eine entsprechende Anzahl von Schneidrädern (8) aufzunehmen.

3. Der Schneidkopf gemäß einem oder mehreren der obigen Ansprüche, **dadurch gekennzeichnet, dass** der Körper (5) des Kopfs und der Werkzeughalter (6) im Verhältnis zu dem Schneidtisch winklig sind, so dass das aktive Schneidrad senkrecht zu der Glasscheibe ist, die geschnitten werden soll, und die inaktiven Schneidräder sich in einer nicht eingreifenden Position befinden.

4. Der Schneidkopf gemäß Anspruch 2, **dadurch gekennzeichnet, dass** die Sitze (7) des Werkzeughalters (6) Schlitze sind, die radial entlang der Kante des Werkzeughalters (6) angeordnet sind, um die Schneidräder (8) aufzunehmen.

5. Der Schneidkopf gemäß Anspruch 4, **dadurch gekennzeichnet, dass** die Schneidräder (8) aus den radialen Schlitzen (7) des Werkzeughalters (6) in einem Grad herausragen, der ausreicht, damit das Schneidrad die zu schneidende Glasscheibe (12) erfassen kann.

6. Der Schneidkopf gemäß Anspruch 1, **dadurch gekennzeichnet, dass** die Schneidräder (8) von Stützpfeilern (9) getragen sind, die in dem Werkzeughalter (6) untergebracht sind.

7. Der Schneidkopf gemäß Anspruch 6, **dadurch gekennzeichnet, dass** die Stützpfeiler (9) eine Werkzeugausrichtungswelle (11) umfassen.

8. Eine Schneidemaschine, insbesondere für flache Glasscheiben, die einen Schneidtisch (1) umfasst, der von einer Schneidbrücke (2) überragt wird, entlang derer sich ein Schneidschlitten (4) bewegen kann, der mindestens einen Schneidkopf (3) trägt; **dadurch gekennzeichnet, dass** der Schneidkopf (3) gemäß einem oder mehreren der obigen Ansprüche bereitgestellt ist.

## Revendications

1. Tête de coupe (3), en particulier pour des tables (1) destinées à découper des feuilles de verre, comportant un corps de tête (5) adapté pour être déplacé le long d'un axe (20) en s'écartant et en se rapprochant d'une table de coupe (1) sur laquelle est disposée une feuille de verre (12) à découper, ledit axe (20) étant agencé verticalement par rapport au plan de coupe de la feuille de verre (12) disposée sur la table de coupe (1), et un porte-outil (6) qui est relié audit corps de tête (5) et est adapté pour tourner par rapport audit corps, ledit porte-outil (6) recevant une pluralité de molettes de coupe (8) adaptées pour être agencées dans une position de coupe après la rotation dudit porte-outil par rapport audit corps (5) de la tête de coupe, **caractérisée en ce que** ledit corps (5) de la tête et ledit porte-outil (6) relié à celui-ci sont agencés sensiblement à un angle par rapport à ladite table de coupe (1) sur laquelle est disposée ladite feuille (12) à découper, et la molette de coupe (8) est agencée dans la position de coupe en alignement axial avec l'axe (20) de déplacement du corps de tête (5).

2. Tête de coupe selon la revendication 1, **caractérisée en ce que** ledit porte-outil (6) comporte une pluralité de logements (7) adaptés pour recevoir un nombre respectif de molettes de coupe (8).

3. Tête de coupe selon une ou plusieurs des revendications précédentes, **caractérisée en ce que** ledit corps (5) de la tête et ledit porte-outil (6) forment un angle par rapport à ladite table de coupe de sorte que la molette de coupe active est perpendiculaire à ladite feuille de verre à découper et les molettes de coupe inactives sont dans une position non interférente.

4. Tête de coupe selon la revendication 2, **caractérisée en ce que** lesdits logements (7) dudit porte-outil (6) sont des fentes agencées radialement le long du bord dudit porte-outil (6), afin de recevoir lesdites molettes de coupe (8).

5. Tête de coupe selon la revendication 4, **caractérisée en ce que** lesdites molettes de coupe (8) font saillie à partir desdites fentes radiales (7) dudit porte-outil (6) sur une étendue qui est suffisante pour que ladite molette de coupe s'engage dans ladite feuille de verre (12) à découper.

6. Tête de coupe selon la revendication 1, **caractérisée en ce que** lesdites molettes de coupe (8) sont supportées par des colonnettes de support (9) reçues à l'intérieur dudit porte-outil (6).

7. Tête de coupe selon la revendication 6, **caractérisée en ce que** lesdites colonnettes de support (9) comportent un arbre d'orientation d'outil (11).

8. Machine de coupe, en particulier pour des feuilles de verre planes, comportant une surface de coupe (1) qui est surmontée d'un portique de coupe (2) le long duquel peut se déplacer un chariot de coupe (4) qui supporte au moins une tête de coupe (3), **caractérisée en ce que** ladite tête de coupe (3) est fournie selon une ou plusieurs des revendications précédentes.
